# EUROPÄISCHE PATENTSCHRIFT

(11) **EP 2 993 307 B1**
(45) Veröffentlichungstag und Bekanntmachung des Hinweises auf die Patenterteilung: **21.02.2018**
(21) Anmeldenummer: 15183760.6
(22) Anmeldetag: 03.09.2015
(51) Int. Cl.: F02C 7/18, F01D 25/24

(54) **LUFTLEITVORRICHTUNG UND TURBOMASCHINE MIT LUFTLEITVORRICHTUNG**
AIR DIRECTING DEVICE AND TURBO ENGINE HAVING AIR DIRECTING DEVICE
DISPOSITIF DEFLECTEUR D'AIR ET TURBOMACHINE DOTEE D'UN DISPOSITIF DEFLECTEUR D'AIR

(30) Priorität: 05.09.2014 DE 102014217830
(43) Veröffentlichungstag der Anmeldung: 09.03.2016
(73) Patentinhaber: Rolls-Royce Deutschland Ltd & Co KG, 15827 Blankenfelde-Mahlow (DE)
(72) Erfinder: Van der Woude, Matthijs, 15834 Rangsdorf (DE)
(74) Vertreter: Maikowski & Ninnemann Patentanwälte Partnerschaft mbB

(56) Entgegenhaltungen:
- EP-A2- 1 184 552
- EP-A2- 2 226 473
- EP-A2- 2 604 837
- WO-A1-82/02181
- WO-A1-92/11444

## Beschreibung

Die Erfindung betrifft eine Turbomaschine mit einer Luftleitvorrichtung mit den Merkmalen des Anspruchs 1.

Die EP 1 184 552 A2 beschreibt eine Vorrichtung zum Kühlen eines Gehäuses einer Fluggasturbine.

In der EP 2 604 837 A2 ist ein System zum Leiten eines Luftstroms zu mehreren Plena beschrieben.

Ein thermisches Management in Flugzeugtriebwerken ist notwendig, da die verwendeten Materialien in vielen Bereichen hohen Temperaturen ausgesetzt sind. Dies gilt insbesondere für die Wandungen im Kerntriebwerk, die Turbinen und Kompressoren umgeben. Dabei ist es bekannt, kühle Luft zu verwenden, die an oder im Flugzeugtriebwerk vorhanden ist.

Daher ist es von Interesse, eine effiziente Kühlung im Flugzeugtriebwerk zu ermöglichen.

Die Aufgabe wird durch ein Flugzeugtriebwerk mit einer Luftleitvorrichtung mit den Merkmalen des Anspruchs 1 gelöst.

Dabei weist die mit einer Luftleitvorrichtung mindestens ein Ventilelement auf, das zwischen einer ersten Position, insbesondere einer Offenposition und einer zweiten Position, insbesondere einer Sperrposition bewegbar ist, wobei in der ersten Position des mindestens einen Ventilelements durch ein Zusammenwirken mit mindestens einem ersten Luftleitelement, das im einem Luftstrom angeordnet ist, ein Kühlluftstrom aus dem Luftstrom in einen Hohlraum zwischen dem Gehäuse und dem Kerntriebwerk führbar ist und das mindestens eine erste Luftleitelement zur Verringerung des Strömungswiderstandes mindestens annähernd parallel zum Luftstrom ausgerichtet ist. Das mindestens eine Ventilelement in der ersten Position und das mindestens eine erste Luftleitelement bilden im Zusammenwirken eine gemeinsame Luftleitfläche zur Abtrennung des Kühlluftstromes aus dem Luftstrom und zur Führung des Kühlluftstromes in den Hohlraum zwischen dem Gehäuse und dem Kerntriebwerk. Das Zusammenwirken von Ventilelement und Luftleitelement erlaubt einerseits die Abzapfung des Kühlluftstroms und andererseits eine widerstandsarme Stellung, wenn kein Kühlluftstrom abgezapft wird.

Da die Abzapfung eines Kühlluftstroms aus einem Nebenstromkanal effizient möglich ist, ist das mindestens eine erste Luftleitelement in einem Nebenstromkanal des Flugzeugtriebwerkes angeordnet.

Damit der Strömungswiderstand gering gehalten wird, kann in einer Ausführungsform das mindestens eine erste Luftleitelement im Wesentlichen stromlinienförmig, keilförmig, oder plattenförmig ausgebildet sein.

In einer Ausführungsform ist das mindestens eine Ventilelement im Wesentlichen plattenförmig, keilförmig oder als gekrümmtes Element ausgebildet, so dass eine effiziente Bauform bei gleichzeitig effizienter Abzapfung des Kühlluftstroms gegeben ist.

Zur Verbesserung der Kühlluftführung kann in einer weiteren Ausführungsform mindestens ein zweites Luftleitelement am Gehäuse des Kerntriebwerks zur Führung des Kühlluftstroms vom mindestens einen Ventilelement in das Gehäuse um das Kerntriebwerk vorgesehen sein. Damit kann der Strömungsübergang vom Ventilelement in den Hohlraum um das Kerntriebwerks erleichtert werden.

Zur weiteren Verringerung des Strömungswiderstandes kann in einer Ausführungsform in der zweiten Position, insbesondere der Sperrposition das mindestens eine Ventilelement im Wesentlichen parallel zum Gehäuse des Kerntriebwerkes angeordnet sein oder das mindestens eine Ventilelement kann so angeordnet sein, dass kein Kühlluftstrom gezielt in das Gehäuse des Kerntriebwerks gelangt.

Eine effiziente Betätigung des mindestens einen Ventilelements zwischen der ersten und der zweiten Position ist durch ein pneumatisches, ein elektrisches, ein hydraulisches Ventilbetätigungsmittel und / oder ein Gestänge möglich, insbesondere mit einer Kopplung mit einer Leitschaufelverstellung. Wenn eine Kopplung des Ventilelementes mit der Leitschaufelverstellung vorliegt, kann die dafür vorgesehene Energiequelle auch zur Verstellung des Ventilelementes verwendet werden. Das hydraulische Ventilbetätigungsmittel kann z.B. mit Kraftstoff als Arbeitsfluid arbeiten.

In weiteren Ausführungsformen kann das mindestens eine Ventilelement in der Art eines Schmetterlingsventils ausgebildet sein, das um eine Drehachse verschwenkbar im Luftstrom angeordnet ist. Dabei kann das Schmetterlingsventil zwischen einer ersten und einer zweiten Position verschwenkt werden, insbesondere zwischen einer Offenposition und einer Geschlossenposition.

Zur effizienten Verteilung der Kühlluft im Gehäuse des Kerntriebwerks kann in einer Ausführungsform der Kühlluftstrom in einen Luftsammelkanal innerhalb des Hohlraumes zwischen dem Gehäuse und dem Kerntriebwerk geführt werden.

Da das thermische Management des Triebwerkes wichtig ist, kann in einer weiteren Ausführungsform das mindestens eine Ventilmittel und / oder das mindestens eine erste Luftleitelement mit einer Vorrichtung zur aktiven Spaltkontrolle gekoppelt sein. Die aktive Spaltkontrolle dient dazu, den Spalt zwischen einer Turbinen- oder Kompressorschaufel und einer umgebenden Wandung innerhalb bestimmter Grenzen zu halten. Der Spalt darf nicht zu klein werden, da ansonsten die Gefahr einer mechanischen Beschädigung besteht. Der Spalt darf nicht zu groß werden, da ansonsten der Wirkungsgrad des Flugzeugtriebwerkes sinkt.

In einer Ausführungsform des Flugzeugtriebwerkes ist die mindestens eine Luftleitvorrichtung am Umfang des Gehäuses des Kerntriebwerkes angeordnet. Dabei können die Luftleitvorrichtungen immer da angeordnet sein, wo ein besonderer Kühlungsbedarf im Kerntriebwerk besteht.

In Zusammenhang mit den in den Figuren dargestellten Ausführungsbeispielen wird die Erfindung erläutert. Dabei zeigt
- Fig. 1: eine schematische Schnittansicht durch ein Flugzeugtriebwerk;
- Fig. 2A: eine erste Ausführungsform einer Luftleitvorrichtung mit einem Ventilelement in der ersten Position als Offenposition;
- Fig. 2B: die erste Ausführungsform der Luftleitvorrichtung mit dem Ventilelement in der zweiten Position als Sperrposition;
- Fig. 2C: eine Variation der ersten Ausführungsform einer Luftleitvorrichtung mit einem Ventilelement in der ersten Position als Offenposition;
- Fig. 2D: die Variation der ersten Ausführungsform der Luftleitvorrichtung mit dem Ventilelement in der zweiten Position als Sperrposition;
- Fig. 3A: eine zweite Ausführungsform einer Luftleitvorrichtung mit einem Ventilelement in der ersten Position als Offenposition;
- Fig. 3B: die zweite Ausführungsform der Luftleitvorrichtung mit dem Ventilelement in der zweiten Position als Sperrposition;
- Fig. 4A: eine dritte Ausführungsform einer Luftleitvorrichtung mit einem Ventilelement in der ersten Position als Offenposition;
- Fig. 4B: die dritte Ausführungsform der Luftleitvorrichtung mit dem Ventilelement in der zweiten Position als Sperrposition;
- Fig. 5A: eine vierte Ausführungsform einer Luftleitvorrichtung mit einem Ventilelement in der ersten Position als Offenposition;
- Fig. 5B: die vierte Ausführungsform der Luftleitvorrichtung mit dem Ventilelement in der zweiten Position als Sperrposition;
- Fig. 6A: eine fünfte Ausführungsform einer Luftleitvorrichtung mit einem Ventilelement in einer 1/3 Offenposition;
- Fig. 6B: die fünfte Ausführungsform der Luftleitvorrichtung mit dem Ventilelement in einer 1/3 Sperrposition;
- Fig. 7A: eine sechste Ausführungsform einer Luftleitvorrichtung mit einem Ventilelement in der ersten Position als Offenposition;
- Fig. 7B: die sechste Ausführungsform der Luftleitvorrichtung mit dem Ventilelement in der zweiten Position als Sperrposition;
- Fig. 8A: eine siebte Ausführungsform einer Luftleitvorrichtung mit einem Ventilelement in der ersten Position als Offenposition;
- Fig. 8B: die siebte Ausführungsform der Luftleitvorrichtung mit dem Ventilelement in der zweiten Position als Sperrposition;
- Fig. 9A: eine achte Ausführungsform einer Luftleitvorrichtung mit einem Ventilelement in der ersten Position als Offenposition;
- Fig. 9B: die achte Ausführungsform der Luftleitvorrichtung mit dem Ventilelement in der zweiten Position als Sperrposition.

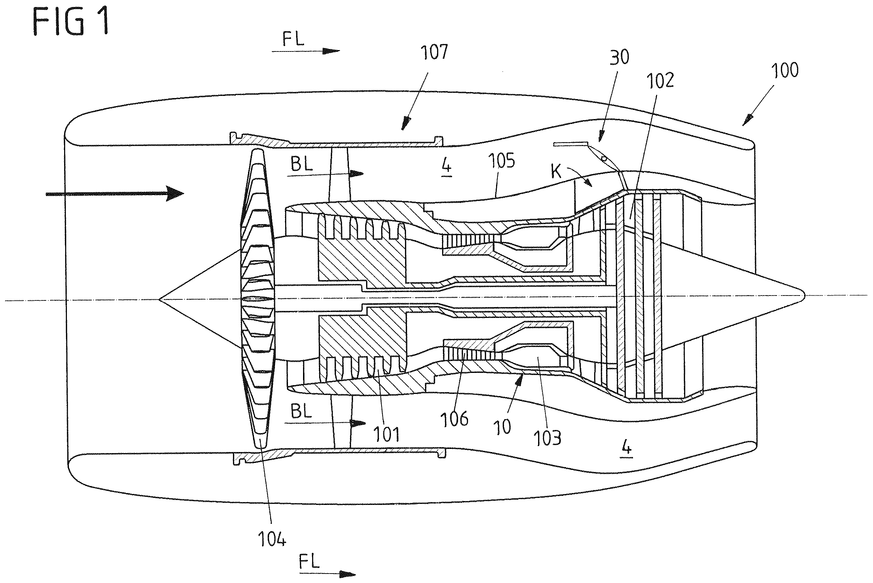

In Fig. 1 ist ein an sich bekanntes Flugzeugtriebwerk 100 in der Form eines Turbofantriebwerkes mit einem Kerntriebwerk 10 dargestellt, das von einem Gehäuse 105 (auch Fairing genannt) umgeben wird.

Das Flugzeugtriebwerk 100 wird von einem freien Luftstrom FL außen umströmt. In das Flugzeugtriebwerk 100 eintretende Luft wird durch den Fan 104 (einem Niederdruckkompressor) etwas verdichtet, wobei der größte Teil der Luft BL durch den Nebenstromkanal 4 strömt, der das Gehäuse 105 des Kerntriebwerks 10 umgibt.

Der Rest der eintretenden Luft wird in einem Mitteldruckkompressor 101 und einem Hochdruckkompressor 106 verdichtet. In anschließenden Brennkammern 103 erfolgt eine Erhitzung und in einer daran anschließenden Hochdruck-, Mitteldruck und Niederdruckturbine 102 jeweils eine Entspannung.

Der Luftstrom FL um das Flugzeugtriebwerk 100 herum und der Luftstrom BL im Nebenstromkanal 4 sind verglichen mit der Luft im Kerntriebwerke 10 wesentlich kühler, so dass diese Luftströme FL und BL zu Kühlzwecken in verschiedenen Bereichen des Flugzeugtriebwerks 100 verwendet werden können. Das Gehäuse 105 bildet zusammen mit der Wandung des Kerntriebwerks 10 einen Hohlraum aus, in dem beispielsweise Kraftstoffleitungen untergebracht sind und durch den ein Kühlluftstrom K geleitet werden kann.

Eine Luftleitvorrichtung 30 (in Fig. 1 nur schematisch dargestellt) dient zur Ableitung eines Kühlluftstroms K, der in der hier dargestellten Ausführungsform Luft aus dem Luftstrom BL im Nebenstromkanal 4 abzapft. Alternativ oder zusätzlich könnte die Luftleitvorrichtung 30 zur Ableitung eines Kühlluftstroms K auch Luft aus der Umgebung des Flugzeugtriebwerkes 100 abzapfen, d.h. aus dem Luftstrom FL. Dieser Kühlluftstrom kann allerdings nur zu Kühlungs- oder Ventilierungszwecken der den Nebenstromkanal 4 umgebenden Gondelhohlräume 107 verwendet werden, da der Totaldruck zu gering ist, um auch den Hohlraum um das Kerntriebwerk 10 zu belüften bzw. zu kühlen. Dazu benötigt es eine Luftleitvorrichtung 30 im Nebenstromkanal 4.

Das hier dargestellte dreiwellige Flugzeugtriebwerk 100 mit der Luftleitvorrichtung 30 ist nur beispielhaft zu verstehen. Die Luftleitvorrichtung 30 zur Ableitung des Kühlluftstroms K kann auch in Verbindung mit Flugzeugtriebwerken 100 verwendet werden, die nur ein oder zwei Kompressoren 101 oder Turbinen 102 aufweisen, d.h. wenn ein einwelliges oder zweiweilliges Flugzeugtriebwerk 100 verwendet wird.

Auch ist hier aus Gründen der Einfachheit nur eine Luftleitvorrichtung 30 zur Ableitung des Kühlluftstroms K dargestellt. Grundsätzlich ist es möglich, dass mehrere solcher Luftleitvorrichtungen 30, z. B. am Umfang des Gehäuses 105 um das Kerntriebwerk 10, angeordnet sind.

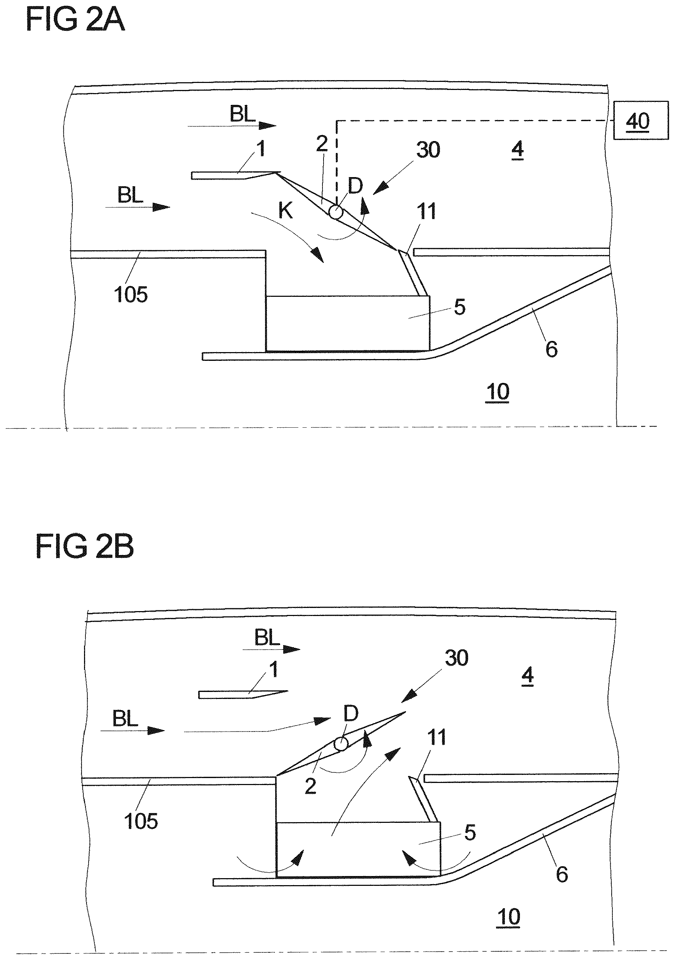

In Fig. 2A und 2B ist eine erste Ausführungsform für eine Luftleitvorrichtung 30 dargestellt. Mit der Luftleitvorrichtung 30 wird aus dem Luftstrom BL, der durch den Nebenstromkanal 4 strömt, ein Kühlluftstrom K abgezapft, der dann in den Hohlraum zwischen dem Gehäuse 105 um das Kerntriebwerks 10 geführt wird.

Diese Luftführung wird in der ersten Ausführungsform durch das Zusammenwirken zweier Elemente erreicht, nämlich einem ersten Luftleitelement 1 und einem Ventilelement 2.

Das erste Luftleitelement 1 ist hier im Luftstrom BL angeordnet, wobei die Halterungsstreben des ersten Luftleitelementes 1 hier aus Gründen der Übersicht nicht darstellt sind. Die Halterungsstreben können z.B. hinter und vor der Zeichnungsebene liegen.

Das erste Luftleitelement 1 ist hier im Wesentlichen plattenförmig ausgebildet, so dass es einen sehr geringen Strömungswiderstand hat. Eine plattenförmige Ausbildung schließt insbesondere auch eine gebogene Platte ein, da das erste Luftleitelement 1 in etwa der Krümmung des Gehäuses 105 des Kerntriebwerkes 10 folgen kann. In einer alternativen Ausführungsform kann das Luftleitelement 1 auch in der Form eines Ringabschnittes ausgebildet sein. Die radiale Erstreckung des Luftleitelementes 1 kann dabei so bemessen sein, dass die sich ausbildende Grenzschicht nicht erfasst wird.

In einer alternativen Ausführungsform ist das erste Luftleitelement 1 als Strömungskörper ausgebildet, der stromlinienförmig im Luftstrom BL angeordnet ist.

In jedem Fall ist das erste Luftleitelement 1 in dieser Ausführungsform im Wesentlichen parallel zum Luftstrom BL ausgerichtet, um den Strömungswiderstand klein zu halten.

Die Ausführungsform der Luftleitvorrichtung 30 weist ferner das Ventilelement 2 auf, das zwischen einer ersten Position als Offenposition (Fig. 2A) und einer zweiten Position als Sperrposition (Fig. 2B) bewegt werden kann. In der Offenposition kann der Kühlluftstrom K gezielt in den Hohlraum zwischen dem Gehäuse 105 und dem Kerntriebwerk 10 eintreten, in der Sperrposition nicht.

Grundsätzlich kann das Ventilelement 2 zwischen einer ersten Position und einer zweiten Position verstellt werden, wobei die erste Position so ausgebildet sein kann, dass mehr Kühlluft in das Gehäuse 105 des Kerntriebwerks 10 gelangen kann, als in der zweiten Position bzw. dass durchaus gezielt ein Kühlluftstrom in den Hohlraum zwischen dem Gehäuse 105 und dem Kerntriebwerk 10 eintreten kann, aber weniger als in der ersten Position.

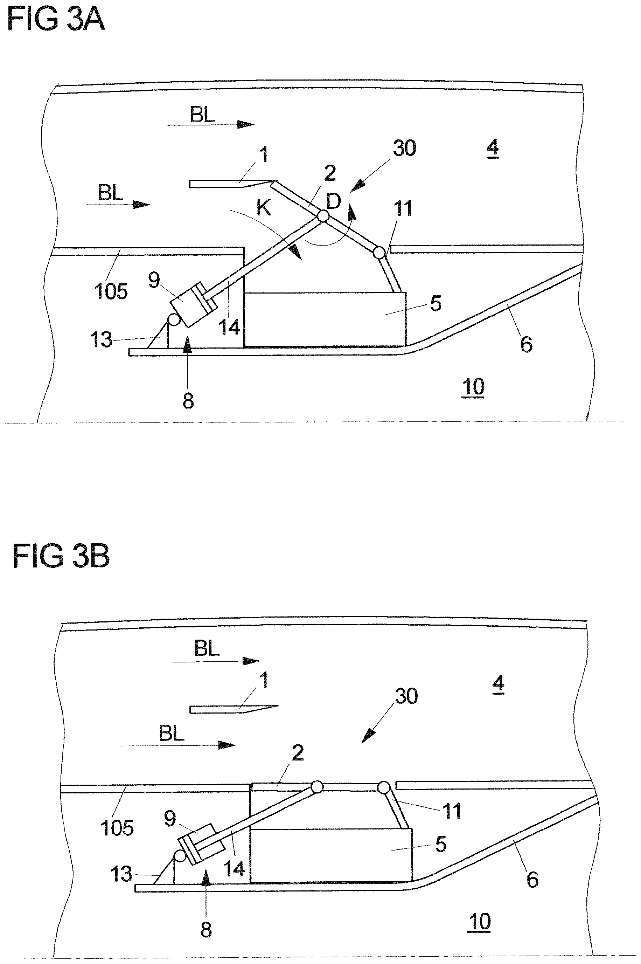

In der Sperrposition kann eine Öffnung im Gehäuse 105 des Kerntriebwerks 10 verschlossen sein (siehe Fig. 3B) oder der Luftstrom BL wird so geführt, dass gezielt kein Kühlluftstrom K in den Hohlraum zwischen dem Gehäuse 105 und dem Kerntriebwerk 10 eintreten kann.

In der ersten Ausführungsform der Fig. 2A ist das Ventilelement 2 als eine Art Schmetterlingsventil ausgebildet, d.h. es ist im Wesentlichen plattenförmig oder auch gekrümmt ausbildet, wobei das Ventilelement 2 um eine Drehachse D verdrehbar ist. Die Bewegung des Ventilelements 2 wird durch einen Antrieb eines hier nicht dargestellten Ventilbetätigungsmittels 20 bewirkt, das für eine Rotation um die Drehachse D sorgt.

In der Offenposition (Fig. 2A) ist das Ventilelement 2 so in den Luftstrom BL geneigt, dass der Luftstrom BL gegen das Ventilelement 2 prallt. Gleichzeitig ist in der Offenposition die obere Kante des Ventilelementes 2 dicht am ersten Luftleitelement 1 angeordnet oder die obere Kante berührt das erste Luftleitelement 1. Damit wirken die beiden Elemente 1, 2 so miteinander zusammen, dass eine gemeinsame, in der Strömungs-Wirkung gekrümmte, Luftleitfläche entsteht (d.h. aus einzelnen Plattenabschnitten gebildet), so dass ein Teil des Luftstroms BL als Kühlluftstrom K in den Hohlraum zwischen dem Gehäuse 105 und dem Kerntriebwerks 10 geführt wird.

Ein zweites Luftleitelement 11 sorgt dafür, dass im Übergangsbereich zwischen der unteren Kante des Ventilelementes 2 und dem Gehäuse 105 des Kerntriebwerks 10 eine gute Führung des Kühlluftstromes K in den Hohlraum zwischen dem Gehäuse 105 und dem Kerntriebwerks 10 erfolgt.

Innerhalb des Hohlraums zwischen dem Gehäuses 105 und dem Kerntriebwerks 10 ist ein Luftsammelkanal 5 angeordnet, mit dem der Kühlluftstrom K in Umfangsrichtung um das Kerntriebwerk 10 verteilt werden kann. Damit ist es dann gezielt möglich, eine Wandung eines Turbinengehäuses 6 zu kühlen.

Die Kühlung eines Turbinengehäuses 6 ist, z.B. im Rahmen einer - hier nur schematisch dargestellten - aktiven Spaltkontrolle 40 (auch Tip-Clearance Control (TCC) genannt), sinnvoll.

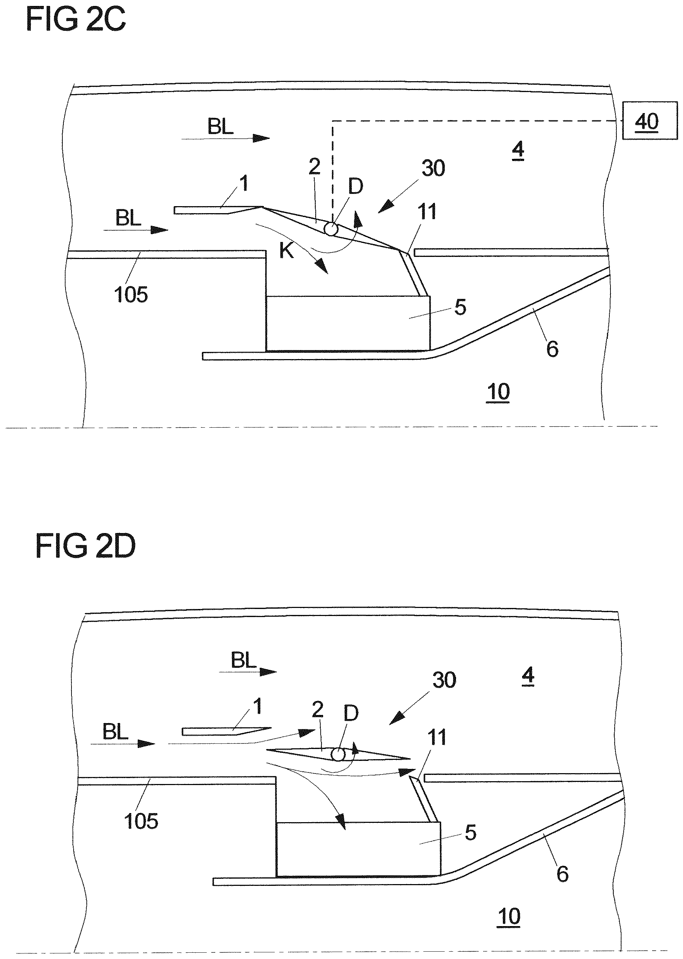

Die aktive Spaltkontrolle 40, die aus Gründen der Übersichtlichkeit nur in den Fig. 2A und 2C dargestellt ist, ist z.B. eine Datenverarbeitungsvorrichtung, die Messdaten aus der Turbine verarbeiten kann und entsprechende Stellgrößen ausgegeben kann.

Dabei kann z.B. die Stellung des Ventilelements 2 in Abhängigkeit einer in der Turbine 102 gemessenen Temperatur oder einer Messung des Spaltes zwischen der Schaufelspitze und der Wandung des Turbinengehäuses 6 geregelt werden. Wenn eine größere Kühlleistung gewünscht wird, so kann das Ventilelement 2 z.B. in eine Stellung gemäß der Fig. 2A gebracht werden. Wenn eine geringere Kühlleistung gefordert ist, kann das Ventilelement 2 in eine Position gebracht werden, die der Sperrposition angenähert ist, wie dies in Fig. 2B dargestellt ist. Wie oben ausgeführt, ist es dabei durchaus möglich und sinnvoll, dass das Ventilelement 2 eine Zwischenposition zwischen der Offenposition und der Sperrposition einnehmen kann, nämlich die erste und zweite Position.

In Fig. 2B ist die Luftleitvorrichtung 30 in der Sperrposition dargestellt, wobei in dieser Position kein Kühlluftstrom K gezielt in das Gehäuse des Kerntriebwerks 10 geleitet wird. Der Luftstrom BL kann ohne wesentliches Strömungshindernis zurück in den Nebenstromkanal 4 strömen, da das Ventilelement 2 so geneigt ist (wie in Fig. 2B dargestellt), dass der Luftstrom über die Öffnung im Gehäuse 105 des Kerntriebwerks 10 vorbei bzw. herumgelenkt wird. Allerdings entsteht durch diese Stellung unter dem Ventil ein Unterdruck, der, sofern dies gewünscht sein sollte, die Luft aus dem Luftsammelkanal 5 heraus saugt d.h. eine lokale Entlüftung stattfindet.

In den Fig. 2C und 2D ist eine Variation der ersten Ausführungsform dargestellt. Der Unterschied zur in Fig. 2A und 2B dargestellten Variante ist, dass die Gestaltung aerodynamisch günstiger ist. In der zweiten Position (Fig. 2D) ist die Öffnung im Gehäuse 105 des Kerntriebwerks 10 nicht ganz verschlossen, so dass ein gewisser minimaler Kühlluftstrom K in den Luftsammelkanal 5 eintreten kann. Durch die horizontale Stellung des Ventilelementes 2 wird in der zweiten Position auch ein sehr geringer Luftwiderstand erreicht.

In den Fig. 3A und 3B ist eine zweite Ausführungsform einer Luftleitvorrichtung 30 dargestellt, deren grundsätzliche Funktion, der Verringerung des Strömungswiederstandes der Luftleitvorrichtung 30 in der Sperrposition, mit der ersten Ausführungsform übereinstimmt, so dass auf die obige Beschreibung Bezug genommen werden kann.

Im Unterschied zur ersten Ausführungsform ist das Ventilelement 2 hier nicht in der Art eines Schmetterlingsventils aufgebaut.

Vielmehr ist das Ventilelement 2 hier als plattenförmiges Gelenkelement ausgeführt, das an das zweite Luftleitelement 11 angelenkt ist. Durch ein Ventilbestätigungsmittel 8 kann das Ventilelement 2 zwischen der Offenposition (Fig. 3A) und der Sperrposition (Fig. 3B) bewegt werden. In der dargestellten Ausführungsform dient ein Pneumatikzylinder 9 dazu, die Verschwenkung des Ventilelements 2 zu bewirken. Der Pneumatikzylinder 9 wirkt dabei über eine Kolbenstange 14 auf das Ventilelement 2.

Alternativ oder zusätzlich könnten auch ein Hydraulikzylinder oder ein motorischer Antrieb dazu dienen, das Ventilelement 2 zu verstellen.

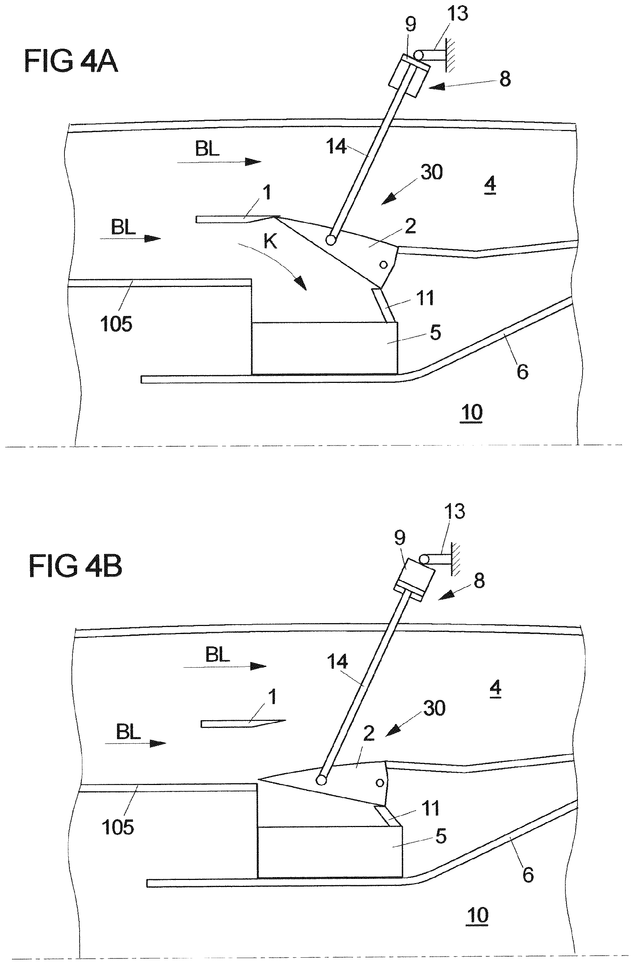

In der dritten Ausführungsform gemäß Fig. 4A und B ist das Ventilelement 2 als eine Art gelenkige Klappe ausgebildet, die im Gegensatz zur zweiten Ausführungsform keilförmig ist und von einem Ventilbetätigungsmittel 8 betätigt wird. Diese kann von der äußeren Wandung des Triebwerksgehäuses, aber auch an anderen Stellen - wie in nachfolgenden Ausführungsbeispielen dargestellt wird - betätigt werden. Auch dabei kann ein pneumatischer, hydraulischer oder elektrischer Antrieb verwendet werden. Der Gelenkpunkt um den das Ventilelement bewegt wird ist geometrisch so angeordnet, dass in jeder Stellung der Klappe eine Luftdichtigkeit mit dem zweiten Luftleitelement 11 und gleichzeitig ein bestmöglicher aerodynamischer Übergang mit dem Gehäuse 105 gewährleistet ist.

In Fig. 4A ist die Offenposition dargestellt, bei der der Kühlluftstrom K - geführt durch das erste Luftleitelement 1, das Ventilelement 2 und das zweite Luftleitelement 11 - in das Innere des Gehäuse 105 des Kerntriebwerkes 10 bzw. in den Luftsammelkanal 5 eintritt.

In Fig. 4B ist die Sperrposition dargestellt, bei der das Ventilelement 2 die Öffnung im Gehäuse 105 des Kerntriebwerks 10 verschließt.

Das Ventilelement 2 weist bei dieser Ausführungsform einen keilförmigen Querschnitt auf, dessen Spitze in den Luftstrom BL orientiert ist. Dadurch bietet das Ventilelement 2 in der Offenposition dem Luftstrom BL oberhalb der Luftabzapfung wenig Strömungswiderstand. Auch in der Sperrposition bietet das Ventilelement 2 dieser Ausführungsform wenig Strömungswiderstand, weil der Keil an seiner Oberseite aerodynamisch glatt vom Luftstrom BL überströmt wird.

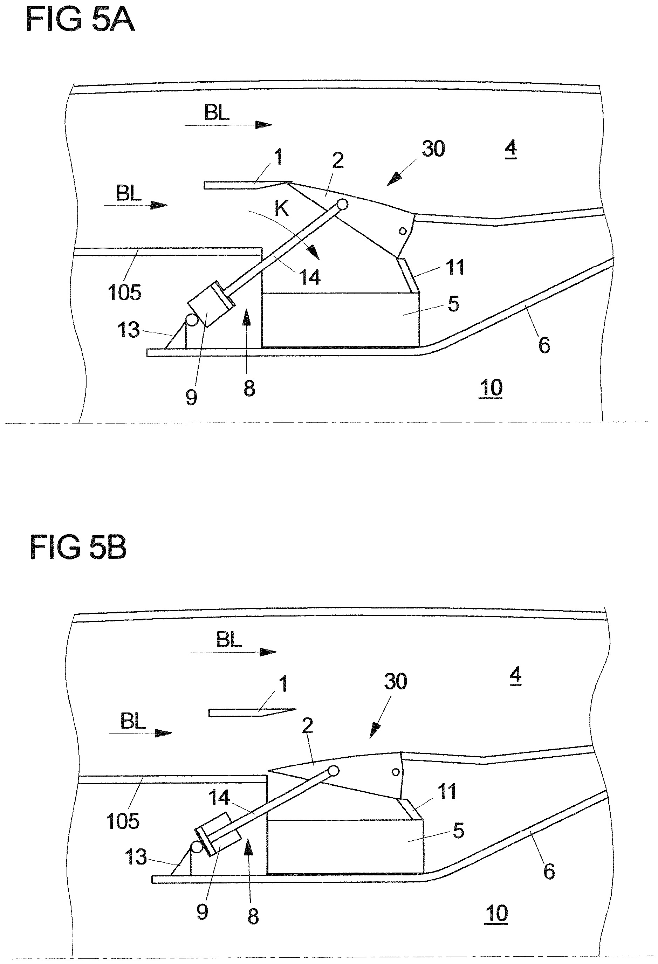

Die vierte Ausführungsform gemäß Fig. 5A und 5B ist eine Kombination der zweiten und dritten Ausführungsform, so dass auf die entsprechende Figurenbeschreibung Bezug genommen werden kann.

Aus der dritten Ausführungsform stammt dabei das Ventilelement 2 mit dem keilförmigen Querschnitt. Aus der zweiten Ausführungsform stammt dabei die Ansteuerung des Ventilelementes 2 durch das Ventilbetätigungsmittel 8, das mittels Haltevorrichtung 13 am Kerntriebwerk 10 angeordnet und schwenkbar gelagert ist.

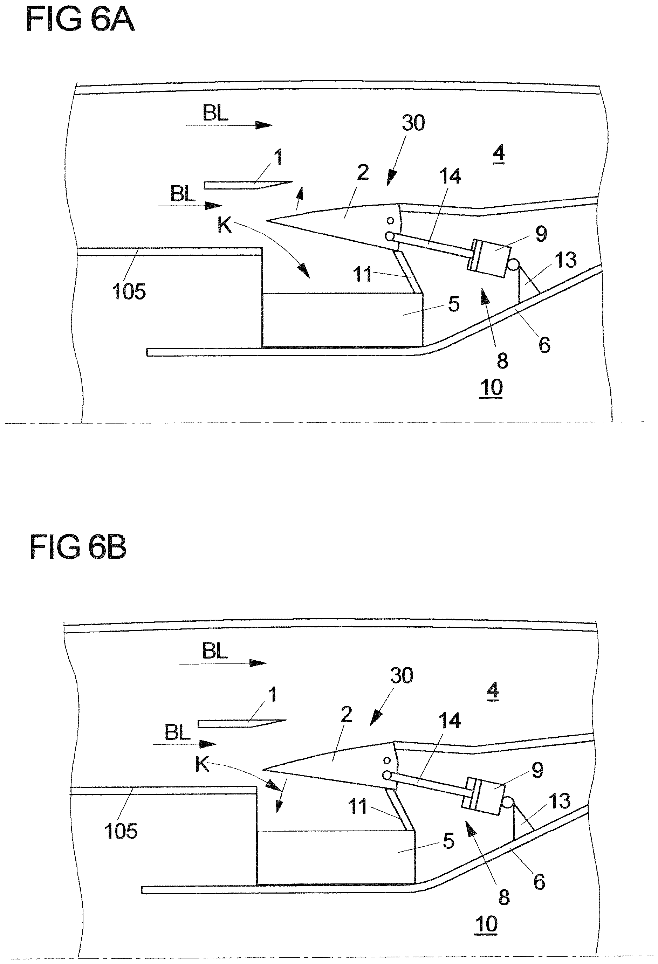

Die fünfte Ausführungsform gemäß Fig. 6A und 6B zeigt eine weitere Variation der dritten und vierten Ausführungsform, wobei auch hier ein Ventilelement 2 mit einem keilförmigen Querschnitt verwendet wird. Das Ventilbetätigungsmittel 8 liegt hier hinter dem Ventilelement 2 und wird mittels Haltevorrichtung 13 am Gehäuse des Kerntriebwerks 10 z.B. dem Turbinengehäuse 6 schwenkbar gelagert. Verglichen mit den Hebelwegen der zweiten, dritten und vierten Ausführungsform ist der Hebelweg hier relativ klein, was eine kompakte Bauweise ermöglicht. Ansonsten auf die Beschreibung der übrigen Ausführungsformen Bezug genommen werden.

In der Fig. 6A ist das Ventilelement 2 in einer ersten Position dargestellt, bei der das Ventil zu einem Drittel geöffnet ist; in Fig. 6B wird eine zweite Position, d.h. eine Drittel-Sperrposition eingenommen. Dies veranschaulicht, dass die Luftleitvorrichtung 30 nicht nur in der Geschlossen- oder Sperrposition betrieben werden kann. Bei einer aktiven Spaltregelung kann es auch auf Zwischenpositionen des Ventilelements 2 ankommen, um den Kühlluftstrom K entsprechende einer Stellgröße einzustellen. In jeder Zwischenposition des Ventilelements 2 wird das keilförmige Ventilelement 2 mit der Spitze des Keils in die Strömung ragend vom Luftstrom BL jeweils glatt umströmt.

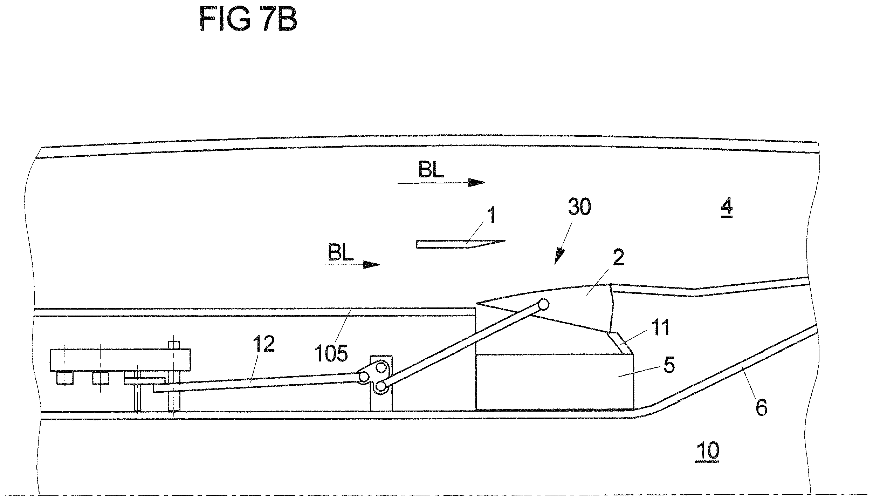

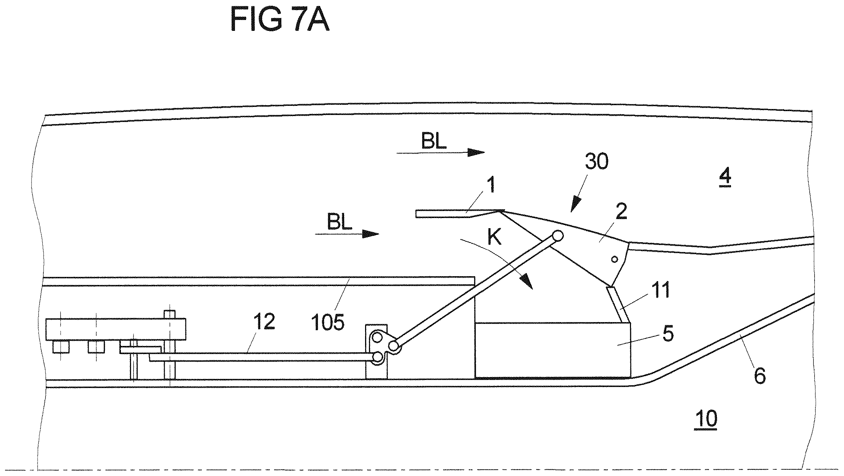

Die sechste Ausführungsform gemäß Fig. 7A und 7B ist eine Variation der vierten Ausführungsform, da auch hier ein Ventilelement 2 mit einem keilförmigen Querschnitt verwendet wird und die Betätigung durch das Ventilbetätigungsmittel 8 vom Gehäuse des Kerntriebwerks 10 aus erfolgt. Allerdings erfolgt in dieser Ausführungsform eine Ansteuerung durch ein Gestänge 12, das mit einer hier nicht im Detail dargestellten Leitschaufelsteuerung des Hochdruckverdichters 106 mechanisch gekoppelt ist. Dies hat den Vorteil, dass kein gesondertes Betätigungsmittel, wie z.B. ein Pneumatikzylinder 9 verwendet werden muss, da der Antrieb die ohnehin vorhandene Leitschaufelsteuerung verwenden kann. Das Gestänge 12 kann platzsparend im Hohlraum zwischen Gehäuse 105 und Kerntriebwerk 10 angeordnet werden.

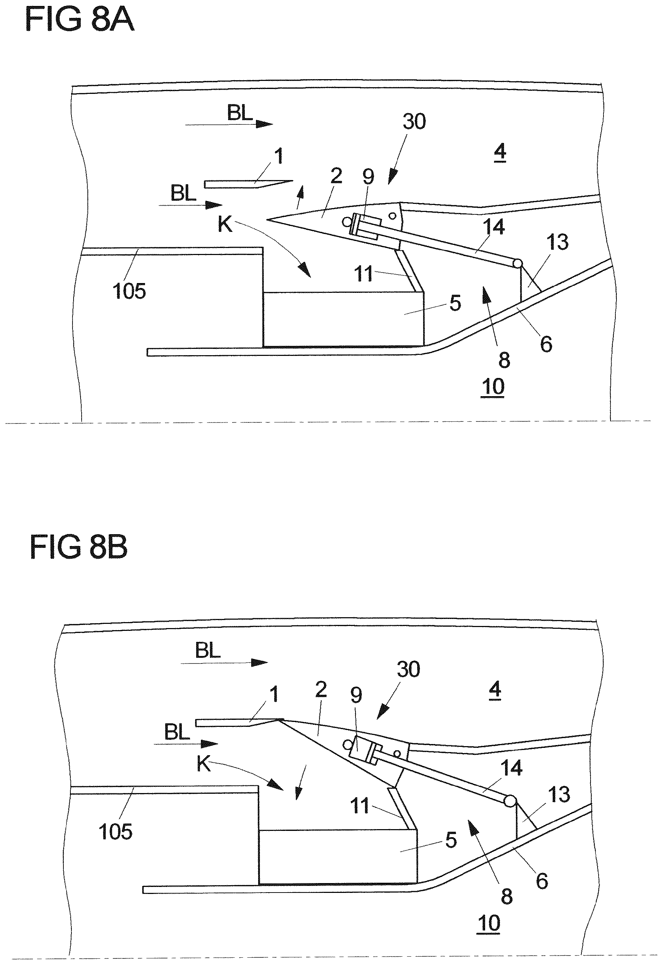

Die siebte Ausführungsform gemäß Fig. 8A und 8B ist eine Variation der fünften Ausführungsform (Fig. 6A, 6B), so dass auf die Beschreibung Bezug genommen werden kann. Dabei ist der Pneumatikzylinder 9 des Ventilbetätigungsmittels 8 im Inneren des im Wesentlichen keilförmig aufgebauten Ventilelements 2 angeordnet, wobei sich z.B. die Kolbenstange 14 des Ventilbetätigungsmittels 8 an der Wandung 6 des Kerntriebwerkes 10 abstützt. Durch die Integration des Pneumatikzylinders 9 (oder einer vergleichbaren Vorrichtung) in das Ventilelement 2 ist eine besonders platzsparende Bauform möglich. Auch wird durch die Integration die Masse des Ventilelements 2 erhöht, was eine höhere Stabilität im Luftstrom L zur Folge hat. Gleichzeitig ist der Pneumatikzylinder 9 dichter am Luftstrom BL angeordnet, was eine zusätzliche Kühlwirkung für den Pneumatikzylinder 9 erlaubt. Die grundsätzliche Anordnung des Ventilbetätigungsmittels 8 in dieser Ausführungsform kann auch auf andere Ausführungsformen übertragen werden.

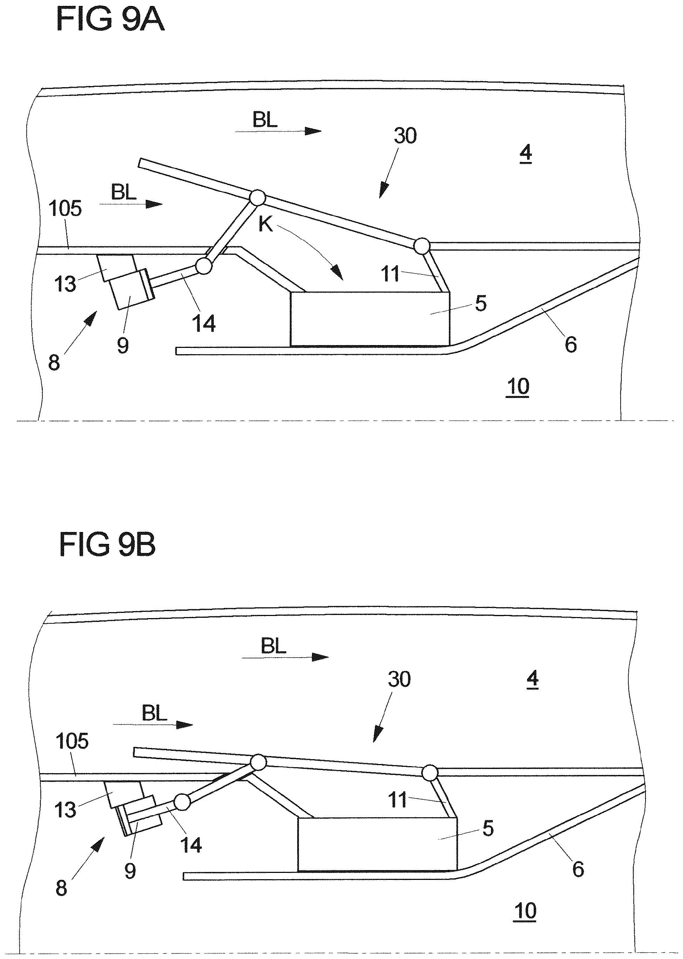

Eine achte Ausführungsform ist in Fig. 9A und 9B dargestellt. Hier ist der Pneumatikzylinder 9 (oder eine vergleichbare Vorrichtung) fest an einer Haltevorrichtung 13 angeordnet, die an der Innenseite des Gehäuses 105 des Kerntriebwerkes 10 angeordnet ist. Die Kolbenstange 14 ist an ihrem Ende mit einem Gelenk 15 versehen, damit ein statisch bestimmter Antrieb des Ventilelementes 2 möglich ist. In Fig. 9A ist das Ventilelement 2 als erste Position in der Offenposition dargestellt, in Fig. 9B in der zweiten Position, wobei hier nicht ganz die Sperrposition erreicht wird.

Bei dieser Ausführungsform kann eine kompakte Bauform erreicht werden, da die Halterung 13 hier Platz im Gehäuse 105 des Kerntriebwerkes 10 finde. Außerdem kann ein Wechsel des Ventilbetätigungsmittels 8 in einfacher Weise erfolgen, wenn z.B. eine Verschraubung der Halterung 13 mit dem Gehäuse 105 gelöst wird.

Die hier dargestellten Ausführungsformen nehmen Bezug auf die Kühlung einer Wandung des Turbinengehäuses 6. In alternativen Ausführungsformen dient eine Luftleitvorrichtung 30 dazu, einen Kühlluftstrom K in den Hohlraum zwischen Gehäuse 105 und dem Kerntriebwerk 10 zu führen, um Bereiche der Wandung eines Kompressors 101 oder die Wandung im Bereich einer Brennkammer zu führen.

Auch können das erste Leitelement 1 und das Ventilelement 2 jeweils aus mehreren Elementen bestehen, die im Zusammenwirken eine Leitfläche für den Kühlluftstrom K bilden.

### Bezugszeichenliste

- 1: erstes Luftleitelement
- 2: Ventilelement
- 4: Nebenstromkanal (By-pass duct)
- 5: Luftsammelkanal
- 6: Turbinengehäuse
- 8: Ventilbetätigungsmittel
- 9: Pneumatikzylinder
- 10: Kerntriebwerk
- 11: zweites Luftleitelement
- 12: Gestänge
- 13: Haltevorrichtung
- 14: Kolbenstange

- 30: Luftleitvorrichtung

- 40: Vorrichtung zur aktiven Spaltkontrolle

- 100: Flugzeugtriebwerk
- 101: Mitteldruckverdichter
- 102: Turbine
- 103: Brennkammer
- 104: Fan
- 105: Gehäuse des Kerntriebwerks (Fairing)
- 106: Hochdruckverdichter
- 107: Gondelhohlraum

- BL: Luftstrom im Nebenstromkanal
- FL: Luftstrom um Flugzeugtriebwerk
- K: Kühlluftstrom

## Patentansprüche

1. Flugzeugtriebwerk mit einer Luftleitvorrichtung (30), wobei die Luftleitvorrichtung (30) mindestens ein Ventilelement (2) aufweist, das zwischen einer ersten Position, insbesondere einer Offenposition und einer zweiten Position, insbesondere einer Sperrposition bewegbar ist, wobei in der ersten Position des mindestens einen Ventilelements (2) durch ein Zusammenwirken mit mindestens einem ersten Luftleitelement (1), das in einem Luftstrom (BL) angeordnet ist, ein Kühlluftstrom (K) aus dem Luftstrom (BL) in einen Hohlraum zwischen dem Gehäuse (105) und dem Kerntriebwerk (10) des Flugzeugtriebwerkes (100) führbar ist und das mindestens eine erste Luftleitelement (1) zur Verringerung des Strömungswiderstandes mindestens annähernd parallel zum Luftstrom (L) ausgerichtet ist, wobei das mindestens eine Ventilelement (2) in der ersten Position und das mindestens eine erste Luftleitelement (1) im Zusammenwirken eine gemeinsame Luftleitfläche zur Abtrennung des Kühlluftstromes (K) aus dem Luftstrom (BL) und zur Führung des Kühlluftstromes (K) in einen Hohlraum zwischen dem Gehäuse (105) und dem Kerntriebwerk (10) bilden, wobei das mindestens eine erste Luftleitelement (1) in einem Nebenstromkanal (4) des Flugzeugtriebwerkes (100) angeordnet ist.

2. Flugzeugtriebwerk nach Anspruch 1, **dadurch gekennzeichnet, dass** das mindestens eine erste Luftleitelement (1) im Wesentlichen stromlinienförmig, keilförmig oder plattenförmig ausgebildet ist.

3. Flugzeugtriebwerk nach Anspruch 1 oder 2, **dadurch gekennzeichnet, dass** das mindestens eine Ventilelement (2) im Wesentlichen plattenförmig, keilförmig oder als gekrümmtes Element ausgebildet ist.

4. Flugzeugtriebwerk nach mindestens einem der vorhergehenden Ansprüche, **gekennzeichnet durch** mindestens ein zweites Luftleitelement (11) am Gehäuse (105) des Kerntriebwerks (10) zur Führung des Kühlluftroms (K) vom mindestens einen Ventilelement (2) in den Hohlraum um das Kerntriebwerk.

5. Flugzeugtriebwerk nach mindestens einem der vorhergehenden Ansprüche, **dadurch gekennzeichnet, dass** in der zweiten Position, insbesondere der Sperrposition das mindestens eine Ventilelement (2) im Wesentlichen parallel zu einer Wandung des Gehäuses (105) des Kerntriebwerkes (10) angeordnet ist oder das mindestens eine Ventilelement (2) so angeordnet ist, dass kein Kühlluftstrom (K) oder nur ein minimal erforderlicher Kühlluftstrom (K) gezielt in den Hohlraum zwischen dem Gehäuse (105) und dem Kerntriebwerk (10) gelangt.

6. Flugzeugtriebwerk nach mindestens einem der vorhergehenden Ansprüche, **dadurch gekennzeichnet, dass** das mindestens eine Ventilelement (2) durch ein pneumatisches, ein elektrisches, ein hydraulisches Ventilbetätigungsmittel (8) und / oder ein Gestänge (12) zwischen der ersten und zweiten Position bewegbar ist, insbesondere mit einer Kopplung mit einer Leitschaufelverstellung.

7. Flugzeugtriebwerk nach mindestens einem der vorhergehenden Ansprüche, **dadurch gekennzeichnet, dass** das mindestens eine Ventilelement (2) in der Art eines Schmetterlingsventils ausgebildet ist, das um eine Drehachse (D) verschwenkbar im Luftstrom (BL) angeordnet ist.

8. Flugzeugtriebwerk nach mindestens einem der vorhergehenden Ansprüche, **dadurch gekennzeichnet, dass** der Kühlluftstrom (K) in einen Luftsammelkanal (5) innerhalb des Hohlraumes zwischen dem Gehäuse (105) und dem Kerntriebwerk (10) führbar ist.

9. Flugzeugtriebwerk nach mindestens einem der vorhergehenden Ansprüche, **dadurch gekennzeichnet, dass** das mindestens eine Ventilelement (2) und / oder das mindestens eine erste Luftleitmittel (1) mit einer Vorrichtung (40) zur aktiven Spaltkontrolle gekoppelt ist.

10. Flugzeugtriebwerk nach mindestens einem der vorhergehenden Ansprüche, **dadurch gekennzeichnet, dass** das ein Ventilbetätigungsmittel (8) mindestens teilweise in das mindestens eine Ventilelement (2) integriert ist.

11. Flugzeugtriebwerk nach mindestens einem der vorhergehenden Ansprüche, **dadurch gekennzeichnet, dass** mindestens eine Luftleitvorrichtung (30) am Umfang des Gehäuses (105) des Kerntriebwerkes (10) angeordnet ist.

## Claims

1. Aircraft engine having an air-guiding device (30), wherein the air-guiding device (30) comprises at least one valve element (2) that is moveable between a first position, in particular an open position, and a second position, in particular a blocking position, wherein in the first position of the at least one valve element (2), by a cooperation with at least one first air-guiding element (1) that is arranged in an airflow (BL), a cooling airflow (K) can be guided from the airflow (BL) into a hollow space between the casing (105) and the core engine (10) of the aircraft engine (100), and the at least one first air-guiding element (1) is aligned at least approximately parallel to the airflow (L) in order to decrease the flow resistance, wherein, the at least one valve element (2) in the first position and the at least one first air-guiding element (1) in cooperation form a common air-guiding surface for the separation of the cooling airflow (K) from the airflow (BL) and for guiding the cooling airflow (K) into a hollow space between the casing (105) and the core engine (10), wherein the at least one first air-guiding element (1) is arranged inside a bypass duct (4) of the aircraft engine (100).

2. Aircraft engine in accordance with Claim 1, **characterized in that** the at least one first air-guiding element (1) is designed substantially streamlined, wedge-shaped or plate-shaped.

3. Aircraft engine in accordance with Claim 1 or 2, **characterized in that** the at least one valve element (2) is designed substantially plate-shaped, wedge-shaped or as a curved element.

4. Aircraft engine in accordance with at least one of the preceding Claims, **characterized by** at least one second air-guiding element (11) at the casing (105) of the core engine (10) for guiding the cooling airflow (K) from at least one valve element (2) into the hollow space around the core engine.

5. Aircraft engine in accordance with at least one of the preceding Claims, **characterized in that,** in the second position, in particular in the blocking position, the at least one valve element (2) is arranged substantially parallel to a wall of the casing (105) of the core engine (10), or the at least one valve element (2) is arranged such that no cooling airflow (K) or only a minimally required cooling airflow (K) enters the hollow space between the casing (105) and the core engine (10) in a targeted manner.

6. Aircraft engine in accordance with at least one of the preceding Claims, **characterized in that** the at least one valve element (2) is moveable between a first and a second position through a pneumatic, an electric or a hydraulic valve actuation means (8) and/or a rod assembly (12), in particular with a coupling to a guide vane adjustment.

7. Aircraft engine in accordance with at least one of the preceding Claims, **characterized in that** the at least one valve element (2) is designed as a butterfly valve that is arranged in the airflow (BL) so as to be pivotable around a rotational axis (D).

8. Aircraft engine in accordance with at least one of the preceding Claims, **characterized in that** the cooling airflow (K) can be routed into an air manifold (5) inside the hollow space between the casing (105) and the core engine (10).

9. Aircraft engine in accordance with at least one of the preceding Claims, **characterized in that** the at least one valve element (2) and/ or the at least one first air-guiding means (1) is coupled to a device (40) for active clearance control.

10. Aircraft engine in accordance with at least one of the preceding Claims, **characterized in that** the one valve actuation means (8) is integrated at least partially in the at least one valve element (2).

11. Aircraft engine in accordance with at least one of the preceding Claims, **characterized in that** at least one air-guiding device (30) is arranged at the circumference of the casing (105) of the core engine (10).

## Revendications

1. Moteur d'avion avec un dispositif de guidage d'air (30), dans lequel le dispositif de guidage d'air (30) présente au moins un élément de soupape (2) qui peut être déplacé entre une première position, notamment une position ouverte et une deuxième position, notamment une position de blocage, dans lequel dans la première position dudit au moins un élément de soupape (2), par une interaction avec au moins un premier élément de guidage d'air (1) qui est disposé dans un flux d'air (BL), un flux d'air de refroidissement (K) peut être guidé en dehors du flux d'air (BL) jusque dans un espace creux situé entre le carter (105) et le moteur de base (10) du moteur d'avion (100) et ledit au moins un premier élément de guidage d'air (1) est orienté au moins presque parallèlement au flux d'air (L) pour diminuer la résistance d'écoulement, dans lequel ledit au moins élément de soupape (2) dans la première position et ledit au moins un premier élément de guidage d'air (1) forment en interaction une surface de guidage d'air commune pour séparer le flux d'air de refroidissement (K) du flux d'air (BL) et pour conduire le flux d'air de refroidissement (K) jusque dans un espace creux situé entre le carter (105) et le moteur de base (10), dans lequel ledit au moins un premier élément de guidage d'air (1) est disposé dans un canal de flux secondaire (4) du moteur d'avion (100).

2. Moteur d'avion selon la revendication n° 1, **caractérisé en ce que** ledit au moins un premier élément de guidage d'air (1) est conçu essentiellement sous forme aérodynamique, cunéiforme ou sous forme de plaque.

3. Moteur d'avion selon la revendication n° 1 ou n° 2, **caractérisé en ce que** ledit au moins un élément de soupape (2) est conçu essentiellement sous forme de plaque, cunéiforme ou sous forme d'un élément courbé.

4. Moteur d'avion selon au moins l'une des revendications précédentes, **caractérisé par** au moins un second élément de guidage d'air (11) sur le carter (105) du moteur de base (10) afin de conduire le flux d'air de refroidissement (K) depuis au moins un élément de soupape (2) dans l'espace creux autour du moteur de base.

5. Moteur d'avion selon au moins l'une des revendications précédentes, **caractérisé en ce que** dans la seconde position, notamment dans la position de blocage, ledit au moins un élément de soupape (2) est disposé essentiellement parallèlement à une paroi du carter (105) du moteur de base (10), ou que ledit au moins un élément de soupape (2) est disposé de telle sorte qu'aucun flux d'air de refroidissement (K) ou que seul un flux d'air de refroidissement (K) minimal requis parvient de manière ciblée dans l'espace creux situé entre le carter (105) et le moteur de base (10).

6. Moteur d'avion selon au moins l'une des revendications précédentes, **caractérisé en ce que** ledit au moins un élément de soupape (2) peut être déplacé entre la première et la seconde position, par un moyen d'actionnement de soupape (8) pneumatique, électrique ou hydraulique et/ ou une tringlerie (12), notamment avec un couplage à un réglage d'aube directrice.

7. Moteur d'avion selon au moins l'une des revendications précédentes, **caractérisé en ce que** ledit au moins un élément de soupape (2) est conçu sous la forme d'une vanne papillon disposée dans le flux d'air (BL) et pouvant pivoter autour d'un axe de rotation (D).

8. Moteur d'avion selon au moins l'une des revendications précédentes, **caractérisé en ce que** le flux d'air de refroidissement (K) peut être conduit dans un canal collecteur d'air (5) à l'intérieur de l'espace creux situé entre le carter (105) et le moteur de base (10).

9. Moteur d'avion selon au moins l'une des revendications précédentes, **caractérisé en ce que** ledit au moins un élément de soupape (2) et/ ou ledit au moins un premier moyen de guidage d'air (1) est couplé à un dispositif (40) destiné au contrôle actif des jeux.

10. Moteur d'avion selon au moins l'une des revendications précédentes, **caractérisé en ce que** ledit un moyen d'actionnement de soupape (8) est intégré au moins partiellement dans ledit au moins un élément de soupape (2).

11. Moteur d'avion selon au moins l'une des revendications précédentes, **caractérisé en ce qu'**au moins un dispositif de guidage d'air (30) est disposé sur le contour du carter (105) du moteur de base (10).
